# EUROPEAN PATENT APPLICATION

(11) **EP 2 416 242 A1**
(43) Date of publication of application: **08.02.2012**
(21) Application number: 10758315.5
(22) Date of filing: 02.02.2010
(51) Int. Cl.: G06F 9/44, B60R 16/02

(54) **IN-VEHICLE ELECTRONIC CONTROL DEVICE, CONTROL SOFTWARE AND DEVELOPMENT TOOL FOR CONTROL SOFTWARE**

(30) Priority: 31.03.2009 JP 2009083998
(71) Applicant: Hitachi Automotive Systems, Ltd., Hitachinaka-shi, Ibaraki 312-8503 (JP)
(72) Inventor: NARISAWA Fumio, Hitachi-shi Ibaraki 319-1292 (JP); YOSHIMURA Kentaro, Hitachi-shi Ibaraki 319-1292 (JP); MIYAKE Junji, Hitachinaka-shi Ibaraki 312-8503 (JP); ISHIGOOKA Tasuku, Hitachi-shi Ibaraki 319-1292 (JP)
(74) Representative: MERH-IP Matias Erny Reichl Hoffmann
(86) International application number: PCT/JP2010/051448
(87) International publication number: WO 2010/113538

(57) **Abstract**

There is provided means enabling effective selection of a method of combining software assets in the development of software that is hierarchized and segmented into components. Control software 101 created with a control software development tool 102 includes an application 103 which executes a control calculation process, a connection layer 104 which connects software components with each other, and basic software 114. In conventional software configurations, combination of software components hierarchized in the basic software is described by a standard I/F 108, and thus it has been difficult to flexibly change the method of combining software components adapting to the design change of the software. In the present invention, flexible selection of the method of combining software components is made possible by using template description for the method of combining software components.

## Description

### Technical Field

The present invention relates to an in-vehicle electronic control device, control software and a development tool for the control software. In particular, the present invention relates to a method of combining software components.

### Background Art

A micro-controller including a CPU (Central Processing Unit), a ROM, a RAM, an input/output signal processing unit, etc. is used as a control device for automobile engine control, etc. Software installed in the micro-controller generally includes an application program for executing a control process, device drivers for executing input/output, an operating system (OS), etc. so that the target of the control can perform intended control operations.

Meanwhile, with the enlargement in the scale of software in recent years, it has become difficult to totally develop all of the application programs and device control programs (executing input/output) for each individual control system. Therefore, various techniques such as designing each piece of software as a small unit (component) and thereafter reusing already-developed components, hierarchizing the components and thereby localizing (limiting) the software's part that needs to be changed, etc. are employed today. In a technique employed recently, such software components are accumulated as assets and software development of an electronic system is conducted by combining appropriate software components in accordance with the configuration of the network of the electronic system as the target of the development (see Patent Literature 1, for example).

In a method commonly employed for improving efficiency of the development of control systems, software's part that needs to be changed according to the configurations of the micro-controller (in which the software is installed), sensor (used by the software), actuator (used by the software), etc. is localized (limited) by segmenting the software into a basic software layer and a control application layer. The basic software layer is a layer for absorbing the difference in the hardware and the network configuration. The control application layer is a layer for executing logical processes relating to the control (see Patent Literature 2, for example). By further segmenting the basic software layer into components corresponding to elements (micro-controller, network, storage device, etc.), further localization is made possible, as well as promoting the reuse of already-existing software in units of components and parallel software development by multiple developers.

It is also possible in the above configuration to define interfaces between components, let developers share information on the interfaces for development of software components, and link the software components supplied by the developers in an object format in the phase of system integration (see Non-Patent Literature 1, for example). With this technique, the development of a control system can be conducted while avoiding disclosure of source codes (design assets of the developers) and handling the source codes as black boxes. This enables cooperative development by multiple independent enterprising bodies based on the division of labor. In another technique, parameters are set in control software based on information inputted by the user (see Non-Patent Literature 2, for example).

However, in the case where the source codes are not disclosed in the development of such software (having the above configuration) by integrating the accomplishments of separate enterprising bodies, difficulties arise in debugging, maintenance and performance measurement. For example, while failure analysis of ordinary software is conducted by successively verifying the validity of data between software components in the order of the data flow, it is impossible to acquire internal information on parts whose design information has not been disclosed. Further, while measurement of processing time of each individual component is necessary in performance analysis, timing analysis, etc., it is difficult to analyze the execution time, etc. of a black-boxed component. Furthermore, in the development of each individual software component, changing data or timing (that will be necessary in the stage of integration into the entire software) at each product development results in the need of changing/checking all the software components. This is incompatible with the improvement of development efficiency through the reuse of the software components. Moreover, total disclosure of data and timing having the possibility to be used (which leads to disclosure of information on the software design of each enterprising body) poses an obstacle to the cooperative development by multiple independent enterprising bodies while maintaining their design assets.

In addition, in the middle of the attempt to standardize the in-vehicle software, the degree of conformance to the standardization varies depending on the customer, product, etc. Thus, in order to achieve high development efficiency, it is necessary in the phase of combining software assets of separate enterprising bodies to flexibly switch the degree of conformance to the standardization and the method of connecting (combining) the software components well adapting to the requests of the customer.

### Prior Art Literature

### Patent Literature

Patent Literature 1: Japanese Patent No. 3688224
Patent Literature 2: Japanese Patent No. 3460593

### Non-patent Literature

Non-Patent Literature 1: Apache Velocity Project (http://velocity.apache.org/)
Non-Patent Literature 2: Java API for XML Processing (https://jaxp.dev.java.net/)

### Summary of the Invention

### Problem to be Solved by the Invention

As above, in the development of software hierarchized and segmented into components, it is difficult to freely combine and reuse software assets. It is therefore an object of the present invention to provide means capable of effectively selecting the method of combining software assets.

### Means for Solving the Problem

In order to resolve the above problem, in an in-vehicle electronic control device in accordance with the present invention comprising a basic software unit for executing input/output from/to in-vehicle instruments, the basic software unit includes a plurality of processing units and a template interface unit having a template retaining input/output relationship among the processing units.

### Effect of the Invention

With the present invention, effective selection of the method of combining software assets is facilitated in the phase of system integration of the software assets.

### Brief Description of the Drawings

Fig. 1 is a block diagram showing the configuration of software.
Fig. 2 is a block diagram showing the configuration of hardware.
Fig. 3 is a schematic diagram showing the timing of analog-to-digital conversion.
Fig. 4 is a block diagram showing the arrangement of hardware and software.
Fig. 5 is a block diagram showing the configuration of an analog-to-digital conversion driver.
Fig. 6 is a block diagram showing a configuration for inserting an observation point for verification.
Fig. 7 is an explanatory view showing an example of interface description of a software component using template description.
Fig. 8 is an explanatory view showing description of a software component using templates.
Fig. 9 is a schematic diagram showing the input/output of a control software development tool.
Fig. 10 is a schematic diagram showing the contents of processing by a template processing unit.
Fig. 11 is an explanatory view showing setting information on software as the target of development.
Fig. 12 is an explanatory view showing details of the template processing unit.

### Mode for Carrying out the Invention

Referring now to the drawings, a description will be given in detail of preferred embodiments in accordance with the present invention.

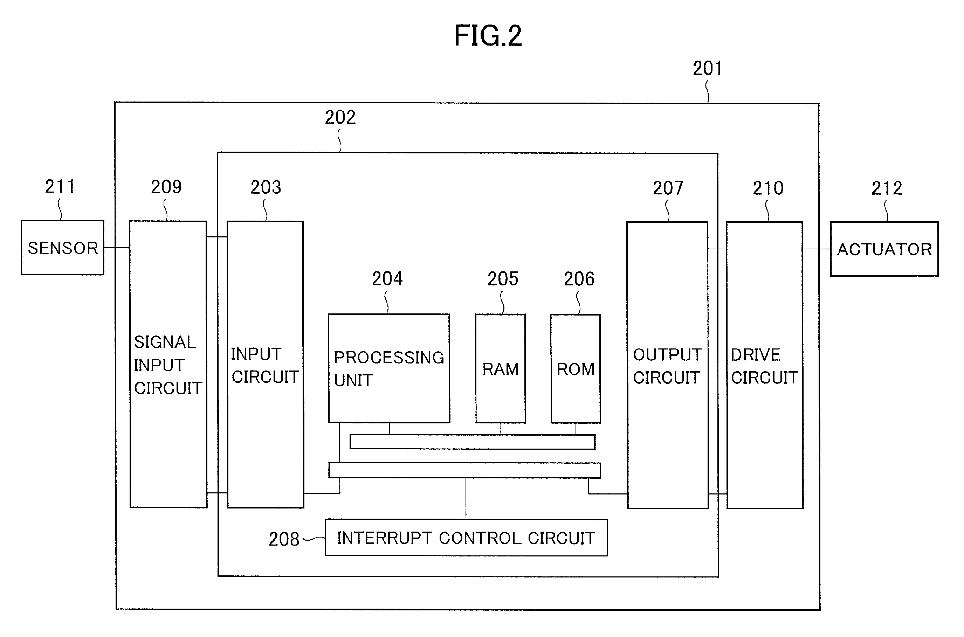

Fig. 2 shows the configuration of an automobile engine control system as an example of a control system as a target of the present invention. An in-vehicle control device (control unit) 201 includes a CPU (Central Processing Unit) 204, an interrupt control circuit 208, a ROM (Read Only Memory) 206, a volatile read/write memory (RAM) 205, an input circuit 203, an output circuit 207, a micro-controller 202 and an output port 211.

Various types of sensors 211 are connected to the control unit 201 via a signal input circuit 213. Meanwhile, an actuator 212 is connected to the control unit 201 via a drive circuit 210. These components are controlled by the control unit 201. The control is carried out by the CPU etc. by reading/writing data from/to registers of the input/output port.

Software describing methods of vehicle control is installed in storage means (ROM 206, RAM 205, etc.) of the control unit and executed by the CPU 204 so that intended control is performed. While the CPU, RAM and ROM are installed in the micro-controller in this example, implementation of the present invention is not restricted to this example. For example, the CPU, RAM and ROM in the control unit may also be implemented by separate IC chips.

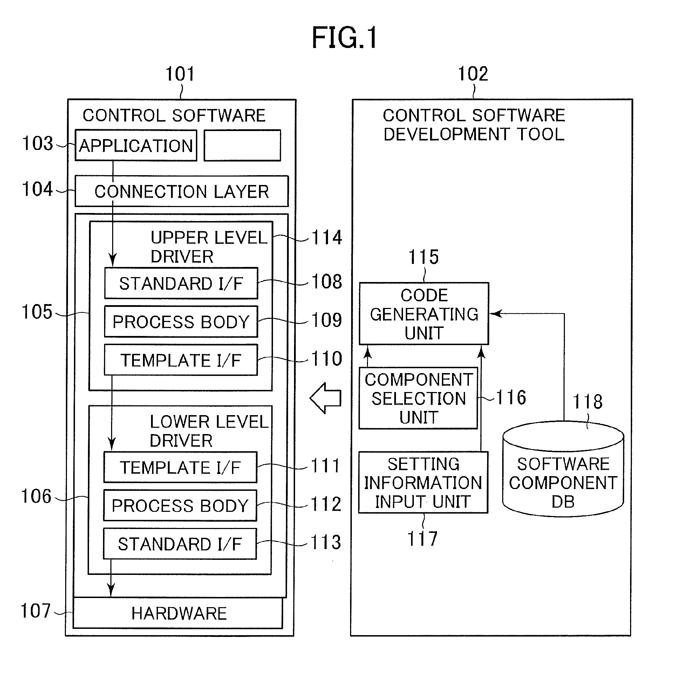

In the present invention, software shown in Fig. 1 is installed in such a control device (control unit) to carry out the control. Control software 101 (explained in detail in embodiment 1) created with a control software development tool 102 (explained in detail in embodiment 2) includes an application 103 which executes a control calculation process, a connection layer 104 which connects software components with each other, and a basic software unit (basic software) 114. The control software 101 is implemented on hardware 107. The basic software 114 executes, for example, a process of inputting/outputting signals from/to the in-vehicle instruments. The basic software 114 is hierarchized into a plurality of processing units, by which the effect of design changes of the software is localized. While the processing units are separated into two layers (upper level driver 105, lower level driver 106) in this embodiment, the basic software 114 may also be made up of a larger number of layers. The upper level driver 105 includes a standard I/F 108 which receives requests from the application 103 by use of a standardized interface, a process body 109 which executes intra-driver processes, and a template interface unit (template I/F) 110 in which a process for calling up and activating the lower level driver has been described in a template description language. The lower level driver 106 includes a template I/F 111 which accepts the call and activation from the upper level driver, a process body 112 which executes intra-driver processes, and a standard I/F 113 which drives the hardware.

In conventional software configurations, the connection between processing units (combination of processing units) is described in each standard interface unit (standard I/F). Since the standard I/F is disclosed to other companies and becomes accessible as a part of the basic software, it is difficult to selectively leave out or alter a part of the interface. Therefore, it has been difficult to flexibly change the input/output relationship among processing units adapting to the design change of the software. In the present invention, flexible selection of the method of combining software components is made possible by using template description for the input/output relationship among processing units.

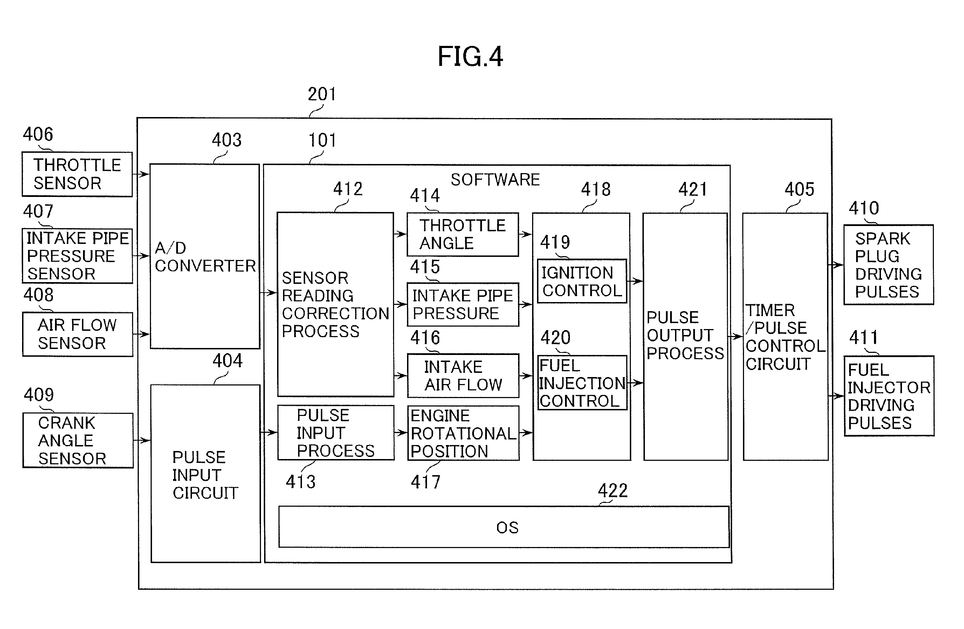

Here, an example of the hardware of the in-vehicle electronic control device and the flow of the process and data of the software is shown in Fig. 4. Fig. 4 shows an example of the basic configuration of an engine control system. An electronic control unit 201 receives data representing the status of the engine from various sensors, such as a throttle sensor 406 for measuring the open angle of the throttle valve having the function of adjusting the intake air flow, an intake pipe pressure sensor 407 for measuring the pressure inside the intake pipe, an air flow sensor 408 for measuring the intake air flow, a crank angle sensor 409 for measuring the angle of the crank shaft rotating in conjunction with the engine. Based on the engine status inputted from the sensors, the electronic control unit 401 outputs a spark plug driving pulse 410 for controlling the ignition of the engine and a fuel injector driving pulse 411 for controlling the valve angles of the injectors. By the signals outputted by the electronic control unit 401, the ignition timing and fuel injection quantity of the engine are determined. The control unit 201 includes a micro-controller. The micro-controller takes in input signals from the sensors via an analog-to-digital converter (A/D converter) 403 or a pulse input circuit 404 for sampling pulse signals, and outputs spark plug driving pulses 410 and fuel injector driving pulses 411 via a timer/pulse control circuit 405.

The control software 101 installed in the storage means of the micro-controller first calculates a throttle angle 414, an intake pipe pressure 415, an intake air flow 416 and an engine rotational position 417 (as input data having logical meanings corresponding to physical values) through a sensor reading correction process 412 and a pulse input process 413. Based on the calculated input data, the control software 101 calculates output values through a control application 418 (ignition control 419, fuel injection control 420), drives the timer/pulse control circuit 405 (hardware) by using the output values through a pulse output process 421, and thereby outputs the spark plug driving pulses 410 and the fuel injector driving pulses 411 as final outputs.

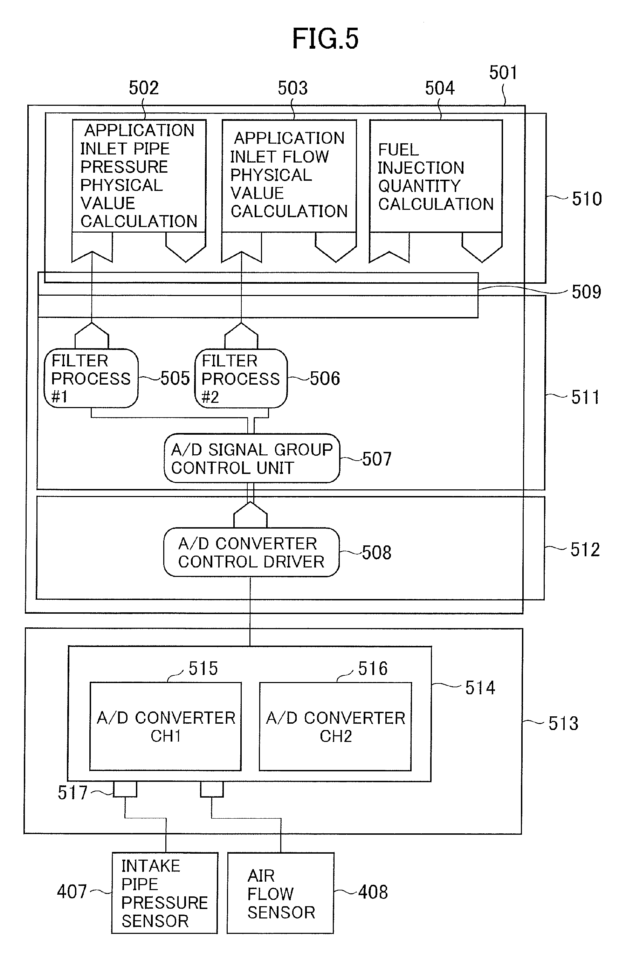

Fig. 5 shows the configuration of an A/D conversion driver commonly used for acquiring the input values via the A/D converter 403. In Fig. 5, the reference numeral "501" denotes control software, "513" denotes hardware of the micro-controller and its built-in A/D converters, "407" denotes the intake pipe pressure sensor, and "408" denotes the air flow sensor as hardware for detecting status of the external environment. The information on the external environment detected by the sensor is taken into the micro-controller via an A/D conversion device 514 and supplied to the software. In this example, the A/D conversion device 514 includes two channels of A/D converters 515 (CH1) and 516 (CH2). The A/D converters 515 and 516 are connected to the sensors via ports 517.

Multiple pieces of application software for controlling an inlet pipe pressure physical value calculation application 502, an inlet flow physical value calculation application 503 and a fuel injection quantity calculation application 504, respectively, are connected together in a connection layer 509 by the software 501. Input signals from the hardware are also connected to the connection layer 509. The input from the hardware is taken in by an A/D converter control driver 508. The values taken in are separated by a signal control unit into individual A/D conversion results of separate channels. The A/D conversion results of the channels undergo filter processes (#1) 505 and (#2) 506, respectively, for removing noise in the input signals and blocking abnormal values. The results of the filter processes 505 and 506 are supplied to the physical value calculation applications 502 and 503, respectively.

In the aforementioned fuel injection quantity calculation application 504, measurement time errors in the input values 502 and 503 as the base of the control calculation have nonnegligible effects on the quality of the control from the viewpoints of fuel consumption efficiency (mileage), etc. Control calculations like those by the fuel injection quantity calculation application 504 are carried out according to a particular sampling period (fixed time constant), on the assumption that the input values are taken in at fixed periods. However, since each control system installed in the control controller utilizes the limited calculation resources of the mounted CPU by scheduling processes, the calculation applications (which are scheduled and executed according to their priority orders) are not necessarily capable of carrying out their processes with desired timing. Therefore, it is necessary in the verification, inspection, etc. (hereinafter referred to as "verification") of the system to confirm whether each of the control calculation values (as final output values) is outputted as a correct value within a desired accuracy range or not by measuring/checking the relationship between the time error and the control calculation output in the system.

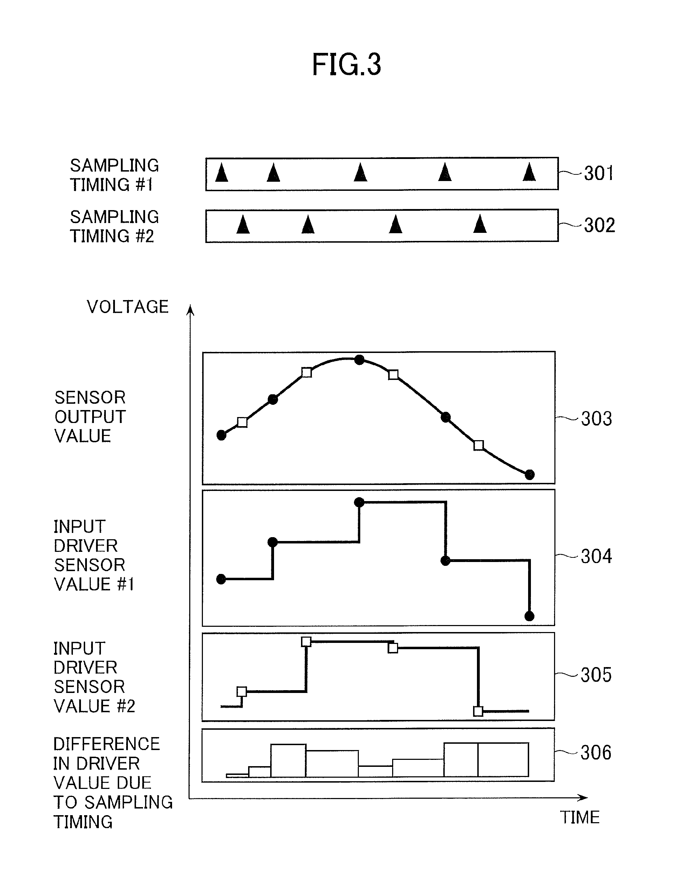

Fig. 3 shows variation in a sensor output value which is caused by the periodic time error (jitter) of the sampling timing of the input process. When the output value of a sensor (sensor output value) changes as indicated with the reference numeral "303" in Fig. 3, the sensor output value 303 is recognized by the software as input values 304 shown in Fig. 3 if the software takes in the sensor output value 303 with the sampling timing 301 shown in Fig. 3. If the software takes in the sensor output value 303 with the sampling timing 302 shown in Fig. 3, the sensor output value 303 is recognized by the software as input values 305 shown in Fig. 3. Thus, the input value as the base of the calculation involves the difference 306 shown in Fig. 3 due to the difference in the sampling timing. Since the sampling timing (301, 302) changes according to the priority, processing load, etc. of the entire system, it is difficult to previously conduct the verification in regard to a single module, that is, verification after system integration is necessary. Further, the in-vehicle control software is required to control a lot of in-vehicle instruments in an integrated manner since there exists cross relationship among the controls of the in-vehicle instruments. This makes the verification of a single module more difficult. Furthermore, an embedded control device is generally not equipped with ample debugging environment differently from general-purpose computers and the input/output relationship among the layers has not been standardized as mentioned above. Therefore, the verification is difficult in conventional software configurations.

### <Embodiment 1>

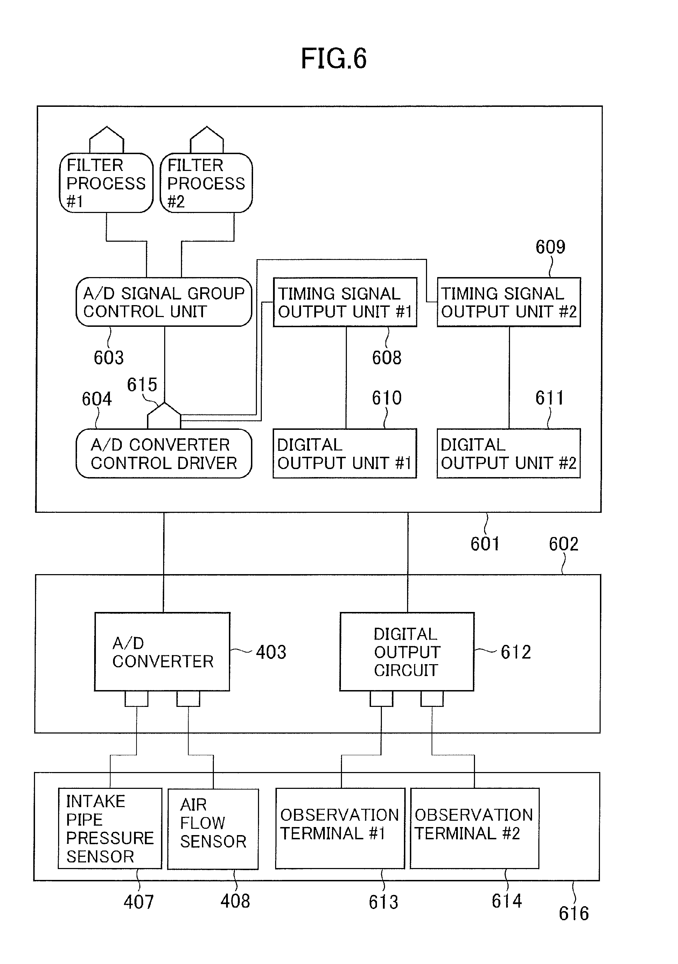

Here, an embodiment of the present invention, as a configuration enabling the measurement of the aforementioned periodic time error, is shown in Fig. 6. In this embodiment, a method which enables the verification of internal data by inserting an observation point in the basic software will be explained. The configuration shown in Fig. 6 includes input/output software 601, an input/output circuit 602 and an external input/output device 616. Since the periodic time error in the timing of the A/D converter 403 taking in the two values of the intake pipe pressure sensor 407 and the air flow sensor 408 can be detected by an A/D converter driver (A/D converter control driver) 604, a connection unit 615 of the A/D converter driver 604 connecting to an A/D signal group control unit 603 notifies timing signal output units #1 608 and #2 609 at each measurement timing. Incidentally, the "connection unit" means a part existing in each software component and serving for connection with external components. Signals outputted from the timing signal output units #1 608 and #2 609 are transmitted to observation terminals #1 613 and #2 614, respectively, via digital output units #1 610 and #2 611 and a digital signal output circuit 612. The verification is possible by comparing output signals of the observation terminals #1 613 and #2 614.

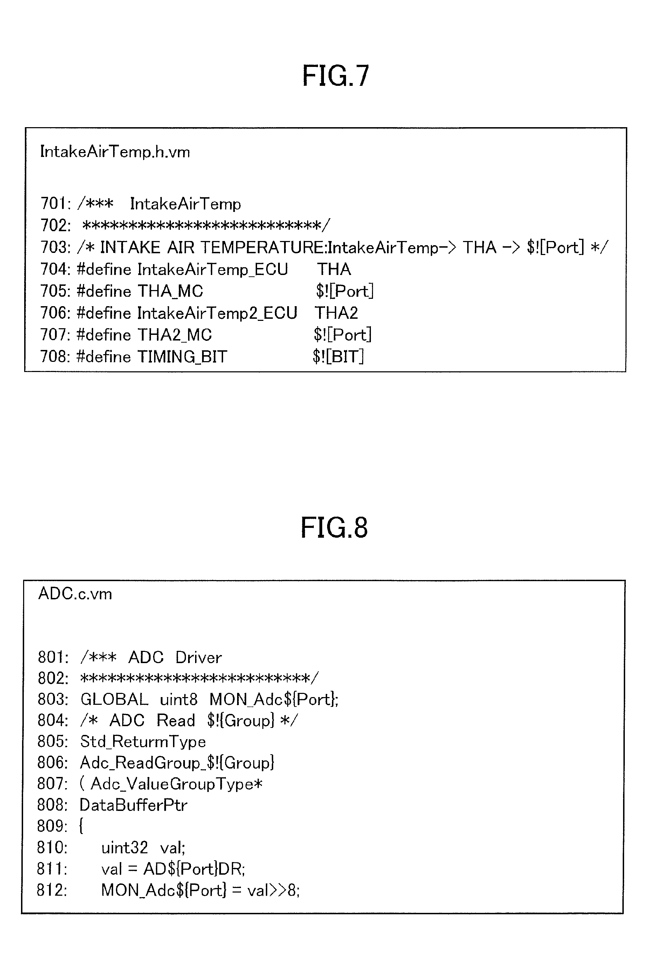

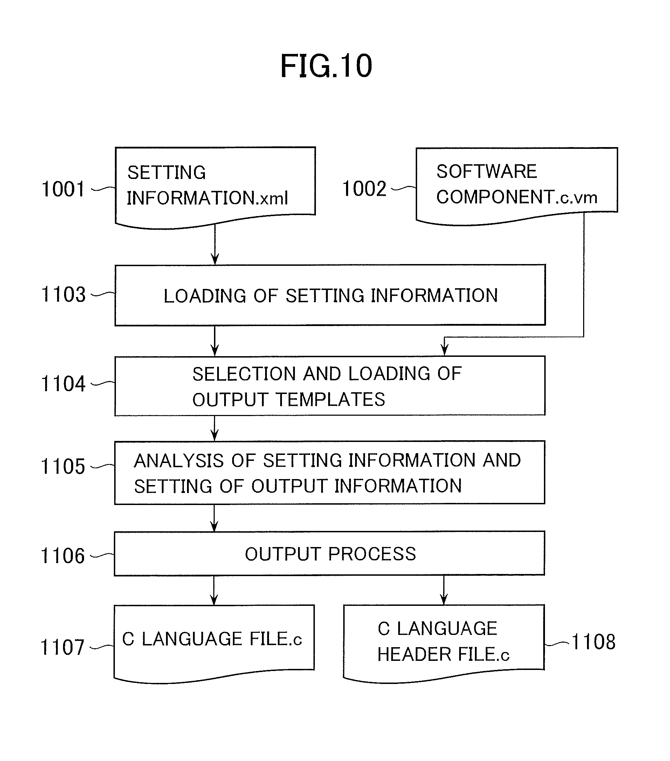

An example of interface description of a software component employing the template description explained referring to Fig. 1 is shown in Fig. 7. The reference numerals "701", "702" and "703" represent comment lines in the C language. The description "$!{Port}" in the line 703 is a template. This character string will be handled as a target of character string substitution which is executed by a template compiler (the same goes for the description "S!{BlT}" in the lines 705, 707 and 708). The template compiler is a part of code generating means 115. The process flow (1104, 1105, 1106) of the template compiler will be explained later with reference to Fig. 10. By using the template description as in this embodiment, selective use for various purposes (outward transmission of data via a connection unit, outputting of a transfer timing signal, serial communication for a debugging device, storing of data, inputting of false signals for debugging, etc.) is made easier, which is highly useful for the verification and performance analysis of software. By this embodiment, debugging of software is made possible by just altering the template I/F, even if the process body of a software component is kept as a black box.

Fig. 8 shows a similar example of the description of an instance in the C language. Similarly to Fig. 7, template descriptions "$!{Port}" and "$!{Group}" are used in the lines 803, 804, 806, 811 and 812.

### <Embodiment 2>

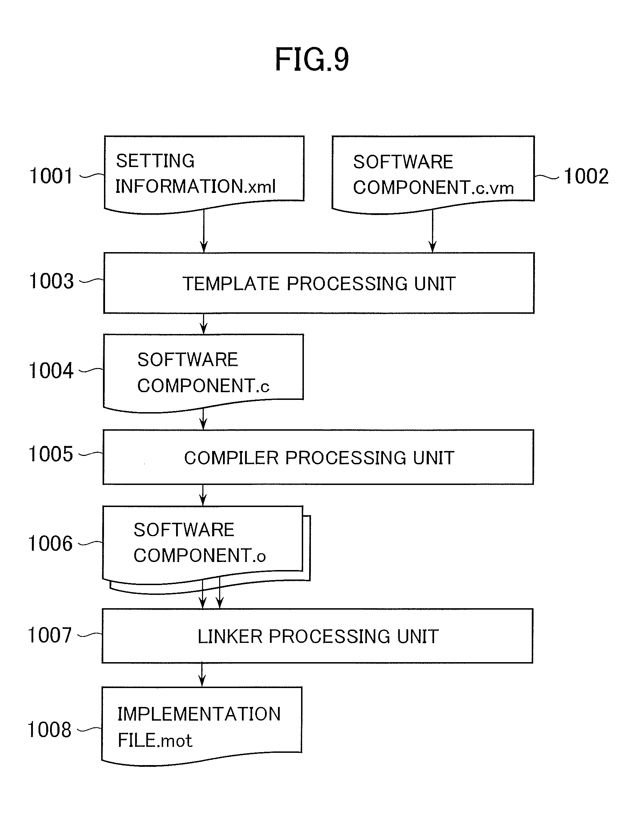

Fig. 9 shows an example of software development employing the control software creating device (control software development tool) 102 for converting software components described with the aforementioned template description into a form suitable for installation in an embedded control controller. The control software creating device 102 receives setting information 1001 and software components 1002 as inputs from the user. Generally, the setting information 1001 is data outputted from a tool which is used for supporting the parameter setting. The setting information 1001 is typically described in the XML (eXtensible Markup Language) format. Specifically, the setting information 1001 represents, for example, the result of driver selection (selection of drivers of necessary sensors (sensors to be used) from drivers of various types of sensors (intake pipe pressure sensor, water temperature sensor, intake air temperature sensor, throttle sensor, etc.)) for software design. An example of the description of the setting information will be explained later. In general, the software components 1002 are those that have been accumulated as design assets of a development division, etc. Incidentally, while the software components 1002 can be described in the Velocity Template Language (Non-Patent Literature 1), other languages employed in the implementation phase (e.g., C language) may also be used when there is no need to use a function specific to a template language (e.g., character string substitution).

A template processing unit 1003 properly embeds various parameters set by the developer in the software by using a velocity compiler as an internal or external command. Here, the various parameters include various set values in regard to the vehicle control (braking force, ignition timing of the engine, etc.). Software components 1004 in the C language obtained as above are converted by a compiler processing unit 1005 into software components 1006 in an object format. By use of the software components 1006 in the object format, an implementation file 1008 of the control software to be written to the actual in-vehicle electronic control device is created by a linker processing unit 1007. As above, according to this embodiment, the control software can be created by properly selecting and combining previously-developed software components based on information set by the user.

Fig. 10 shows the details of the template processing unit 1003 shown in Fig. 9. The setting information 1001 is inputted via setting information input means 117 shown in Fig. 1 and then undergoes a loading analysis (1103). The setting information can be described in XML as mentioned above. In this case, a commonly used XML parser (e.g., JAXP) may be used (Non-Patent Literature 2). Subsequently, based on the setting information, output templates are loaded from a software component DB 118. The software component DB 118 may be implemented by either a general database or a file system on an operating system (e.g., Windows®) installed in a personal computer. Subsequently, templates to be used for the output are selected by component selection means 116 based on the loaded setting information. Finally, output information is set (1105) and an output process (1105) is conducted by the code generating means 115, by which a C language file 1107 and a C language header file 1108, corresponding to the software component 1004, are obtained.

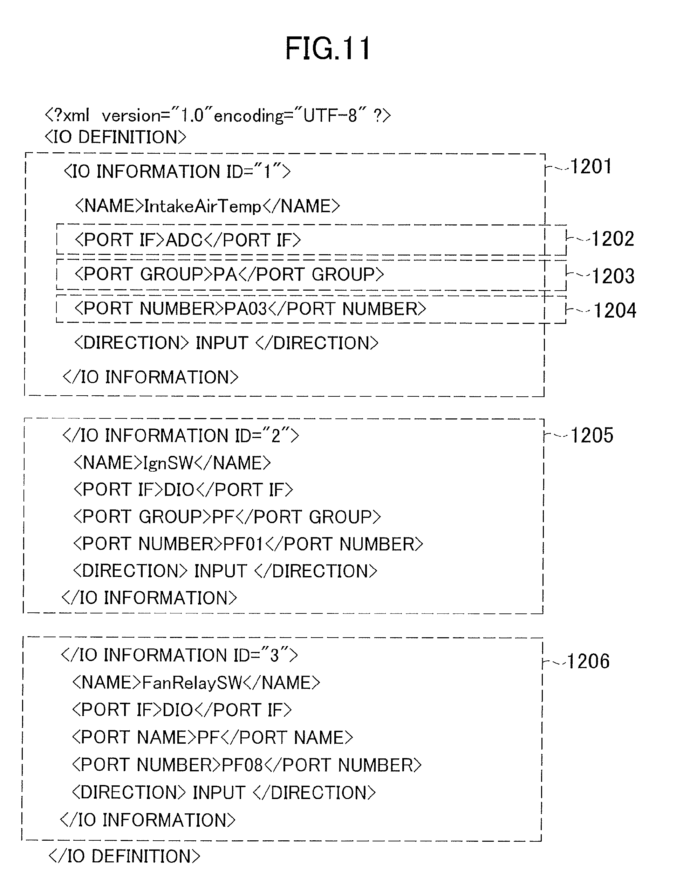

Fig. 11 shows an example of the setting information. In this example, setting information for three pieces of I/O processing software (1201, 1205, 1206) is described. The information 1201 defines data input to an intake air temprerature sensor via an interface of an analog-to-digital converter (ADC) 1202, a port group PA 1203 and a port number PA03 1204.

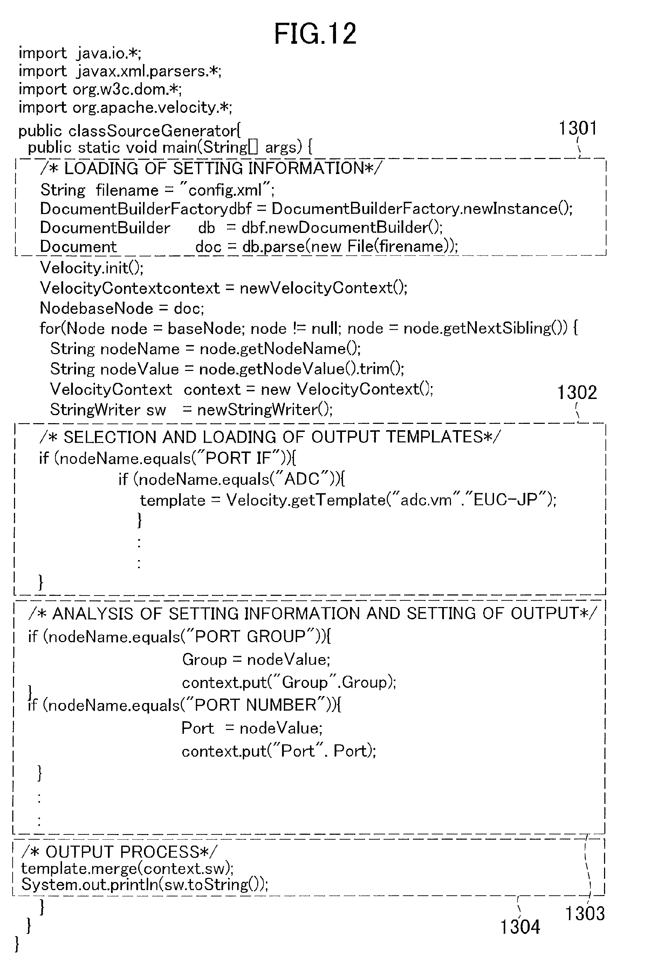

Fig. 12 shows an example of the implementation of the template processing unit 1003 of Fig. 10 in the Java® language. The loading of the setting information (1103) is executed in the part 1301 shown in Fig. 12. The selection and loading of components (1302) are executed in the part 1302. The analysis of the setting information and the setting of the output information (1105) are executed in the part 1303. The output process (1106) is executed in the part 1304. As a result of the series of processes, the C language file 1107 and the C language header file 1108 are outputted.

In this example, "PA03" (line 1204) in Fig. 11 is associated with the variable "${Port}" (lines 803 and 811) in Fig. 8 as information corresponding to the variable "${Port}" in the part 1303 in Fig. 12, by which the result of character string substitution (substituting "PA03" for "${Port}" in Fig. 8) is obtained as the output. The variable "${Group}" in Fig. 8 is similarly substituted with "PA" (line 1203) in Fig. 11 (character string substitution), by which the software component is outputted as the intended source file in the C language.

As above, according to this embodiment, by just rewriting the template I/F of the basic software based on the setting information inputted by the user, the input/output relationship among the layers can be selected automatically, as well as providing the means for maintenance and verification while reducing the rewriting of the body of the source code. Therefore, the disclosure of a software component while keeping its source code body as a black box is facilitated by this embodiment.

While the selection of sensors and the insertion of the observation point have been taken as examples of the contents of the setting information 1001 inputted in this embodiment, the setting information 1001 is not restricted to these examples; any kind of information useful for the combination of software components may be inputted as the setting information 1001. For example, conformance class information requested by customers or other companies (in cooperative relationship based on the division of labor) may be inputted as the setting information 1001. The "conformance class" represents the degree of conformance to standardization which is defined in standard specifications issued in the standardization of software. The contents of a software asset disclosed by each company (cooperating for development based on the division of labor) and the scale of a software asset to be black-boxed vary according to the conformance class. While software assets disclosed by each company increase with the increase in the degree of conformance to the standardization, measurement of intermediate data and timing in black-boxed software becomes more and more important from the viewpoints of performance verification, maintenance, etc. Also from the viewpoints of the overheads and software performance, the progress of standardization is making it difficult to carry out the combination of layers and the arrangement of software components with flexibility.

Therefore, incorporating the know-how of each company into the software being developed by cooperating companies while black-boxing the know-how according to the degree of conformance to the standardization becomes extremely important in terms of the profit and the securement of technology of each company. By selecting the method of combining software layers and software components by changing the template description according to the conformance class in this embodiment, the effects of software development by the division of labor (among cooperating companies, etc.) can be enhanced with the capability for inserting an appropriate observation point in a black-boxed part (whose scale changes depending on the degree of conformance to the standardization), flexibly integrating software components, etc.

As described above, by the present invention, flexible design changes are made possible through the selection of the input/output relationship among the layers in the basic software by use of the template description. In the integration of software assets into a system, it becomes possible to flexibly change/switch the output of information necessary for the verification and performance measurement while reducing the disclosure of the source code (detailed design of each individual software module). This facilitates the maintenance, verification and performance measurement in the phase of system integration, making it possible to reduce the number of verification steps in the software development based on the division of labor. Therefore, the segmentation of software into components, the reuse of already-developed software and the cooperation of multiple enterprising bodies can be promoted.

The method of combining components can differ in the performance, program size, etc. according to the method of implementation (implementation as a function call in the C language, implementation by embedding the process body in the caller, implementation leaving unnecessary interfaces behind, etc.), functions used between the components, and the number of such functions. Such a method can vary widely, greatly reflecting the knowledge, findings, etc. of the developer. However, since it is possible as in the above embodiment to effectively select the method of combining software components by just rewriting the template I/F by use of a development tool supporting the control software, the effect of the developer's knowledge, findings, etc. on the degree of perfection of the control software can be reduced significantly.

Further, development costs of vehicle control software are showing a notable tendency to rise in recent years with the rapid progress of electronic control in terms of safety, fuel saving performance, comfortability, etc. Each enterprising body has independently developed even the basic software as its own software asset and that has been a cause of the cost rise. The present invention serves for the progress of standardization (through the promotion of the division of labor), the enhancement of development efficiency and the reduction of specification changes necessary for adaptation to each vehicle (in which the software is installed), while also contributing to the reduction of production costs of automobiles, etc. Description of Reference Characters

- 101, 510: control software
- 102: control software development tool
- 108, 113: standard interface
- 110, 111: template interface
- 115: code generating means
- 116: component selection means
- 117: setting information input means
- 118: software component DB
- 201: in-vehicle control unit
- 511: input/output signal processing unit
- 512: input/output control unit
- 513: hardware
- 601: input/output software
- 602: input/output circuit
- 615: connection unit
- 616: external input/output device

## Claims

1. An in-vehicle electronic control device comprising a basic software unit for executing input/output from/to in-vehicle instruments, wherein the basic software unit includes:
a plurality of processing units; and
a template interface unit having a template retaining input/output relationship among the processing units.

2. The in-vehicle electronic control device according to claim 1, wherein:
the in-vehicle electronic control device has an observation point for outputting internal data, and
the observation point is set by the template interface unit.

3. The in-vehicle electronic control device according to claim 2, comprising an observation terminal for outputting the internal data obtained from the observation point.

4. The in-vehicle electronic control device according to claim 2, comprising an application for controlling the in-vehicle instruments, wherein information on timing of the control of the in-vehicle instruments by the application is outputted from the observation point.

5. The in-vehicle electronic control device according to claim 1, wherein the input/output relationship is determined based on conformance class information.

6. The in-vehicle electronic control device according to claim 1, wherein the input/output relationship is determined based on information on hardware installed in the in-vehicle electronic control device.

7. Control software for controlling in-vehicle instruments, comprising a basic software unit for executing input/output from/to the in-vehicle instruments, wherein the basic software unit includes:
a plurality of processing units; and
a template interface unit having a template retaining input/output relationship among the processing units.

8. The control software according to claim 7, wherein:
the control software has an observation point for outputting internal data in the basic software unit, and
the observation point is set by description of the template interface unit.

9. The control software according to claim 8, comprising an application for controlling the in-vehicle instruments, wherein information on timing of the control of the in-vehicle instruments by the application is outputted from the observation point.

10. The control software according to claim 7,
wherein the input/output relationship is determined based on conformance class information.

11. A development tool for supporting creation of vehicle control software which comprises a basic software unit executing input/output from/to in-vehicle instruments,
wherein the development tool creates a template interface unit retaining input/output relationship among processing units of the basic software unit by using prepared templates based on setting information inputted by a user.

12. The development tool according to claim 11,
wherein an observation point for outputting internal data of the control software is described using the templates.

13. The development tool according to claim 11,
wherein the setting information includes conformance class information.

14. The development tool according to claim 11,
wherein the setting information includes information on hardware through which the control software executes input/output of signals.

15. The development tool according to claim 11,
wherein character string substitution is used for description of the templates.

16. The development tool according to claim 11,
wherein the development tool sets vehicle control-related parameters in the control software.
